Europäisches Patentamt

(19) European Patent Office

Office européen des brevets

(11) Publication number : **0 342 768 B1**

## (12) EUROPEAN PATENT SPECIFICATION

(45) Date of publication of patent specification :
05.08.92 Bulletin 92/32

(21) Application number : **89201301.2**

(22) Date of filing : **19.05.89**

(51) Int. Cl.⁵ : **B29D 24/00**

(54) Process for the production of a light weight sandwich structure.

(30) Priority : **19.05.88 NL 8801300**

(43) Date of publication of application :
23.11.89 Bulletin 89/47

(45) Publication of the grant of the patent :
05.08.92 Bulletin 92/32

(84) Designated Contracting States :
**BE DE FR NL**

(56) References cited :
DE-A- 3 444 321
GB-A- 930 514
GB-A- 1 145 782
NL-A- 6 917 630
US-A- 3 703 422
US-A- 4 344 995
US-A- 4 542 056

(56) References cited :
JAPANESE PATENT GAZETTE, section Ch,
week 8630, class A, no. 86-194017(30), Der-
went Publications Ltd, London, GB; &JP-A-61
127 341 (SEKISUI CHEM. IND. K.K.) 14-06-1986
PATENT ABSTRACTS OF JAPAN, vol. 4, no.
139 (M-34)[621], 30th September 1980, page
166 M 34; & JP-A-55 95 719 (AKIHIROFUJIM-
URA) 21-07-1980

(73) Proprietor : **HALBERTSMA R&D BV**
**P.O. Box 90**
**NL- 9000 AB Grou (NL)**

(72) Inventor : **Dijkhuizen, Willem**
**Mensinghe 14**
**NL-9471 HX Zuidlaren (NL)**
Inventor : **Drent, Menno**
**Eekhoornstraat 1**
**NL-9497 TA Donderen (NL)**

(74) Representative : **de Bruijn, Leendert C. et al**
**Nederlandsch Octrooibureau**
**Scheveningseweg 82 P.O. Box 29720**
**NL-2502 LS 's-Gravenhage (NL)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a process for the production of a lightweight sandwich structure comprising: covering the open sides of a honeycomb structure with a fibre blanket impregnated with a bonding agent on a plastic base, and compressing the fibre blankets and honeycomb at raised temperature and pressure.

Such a process is known from DE-A1-3.444.321.

Raised temperature means a temperature higher than room temperature (e.g. 40-90°C) and by raised pressure has to be understood a pressure higher than 1 bar (e.g. 5 bar)

The manufacture of sandwich structures using thermo-setting plastics as bonding agent has already been known for a long time. For example in the manufacture of three-ply and multi-ply plywood three or more layers of wood of the same or different types are compressed to a sandwich using a bonding agent, at raised temperature and pressure. A pre-condensation product of urea, phenol or melamine with formaldehyde, with which the wood phases to be bonded to each other are brushed, is normally used here as the bonding agent. In this way one obtains flat sandwich structures which are mechanically strong and are consequently suitable for construction purposes.

In the production of lightweight sandwich structures as the core material it is known to use a plastic foam which can be prepared in the known manner from a thermosetting material using a foaming agent, and then providing the plastic foam with a covering material on either side by means of a bonding agent. These lightweight sandwich structures do, however, have the disadvantage that they are not mechanically strong enough for use for construction purposes.

DE-A1-3.444.321 discloses a method solving the problem that the fibres at the surface of the structure are visable so that for the lackering of the product multiple spraying of fillers, grinding and smoothing is necessary. Therefore it is proposed to spray or cast an inmould coating with a uniform layer thickness on a flat plastic sheet and to apply a fibre reinforced plastic layer on the coating. The plastic sheet is removed just before lackering or inserting of the structure. In case of the production of a sandwich structure the contact surface between the honeycomb and the fibre blanket is so small that the strength of the obtained sandwich structure leaves much to be desired.

The object of the invention is to avoid this problem and to provide a process for the production of a lightweight sandwich structure, which leads to an outstanding mechanical strength of the sandwich.

According to the invention the fibre blankets consist of substantially unbonded loose fibres and the length of the fibres of the blanket is greater than the largest cross section dimension of the openings of the honeycomb structure and during the compressing of the fibre blankets and the honeycomb at raised temperature and pressure a part of the fibres penetrate into the open spaces of the honeycomb thereby considerably increasing the contact surface between the blankets and the honeycomb structure.

As the fibres of the blankets are unbonded they may penetrate rather deeply into the spaces of the honeycomb. The fibres are so long that they will not fall through the spaces of the honeycomb but will be adhered with at least one of their ends to an edge of the honeycomb. Therefore the adhesion between the composite parts of the sandwich is excellent which leads to an increased mechanical strength of the sandwich.

The sandwich structure obtained according to the invention can be covered on either side with a smooth, flat plastic sheet, the thickness of which depends on the thickness of the fibre blanket and on the quantity of plastic bonding agent used.

If desired, the sandwich structure to be produced can be provided with a different coating material by covering the fibre blanket which has been applied with a thin sheet material, for example aluminium on the outside during the manufacture.

The fibres to be used according to the process of the invention can be natural or synthetic types. Suitable fibres are i.a., cotton, flags, jute, glass, polyamides, polyesters and mixtures of these fibres.

GB-A-930514 discloses a method of forming against a pattern or former a sandwich structure comprising outer skins of fibrous material impregnated with a resin capable of hardening at room temperature, which skins are bonded to a core consisting of a honeycomb assembly impregnated with a resin also capable of hardening at room temperature. The resin impregnated honeycomb assembly is hardened at room temperature and heated untill it softens. Then the limb honeycomb is placed in adhesive contact with the still unhardened skin adjacent to the pattern face and it is maintained in position untill cooling imparts rigidity. The increased strength of the sandwich structure is obtained by the connection between the resin with which the honeycomb is impregnated and the resin of the skin. This method is complicated. There is no disclosure in this publication to let the fibres of the skin partially penetrate into the honeycomb to increase the contact surface and thereby the mechanical strength.

NL-A-6917630 describes a process for the production of a lightweight sandwich structure comprising: covering the open sides of a honeycomb structure with a fibre blanket impregnated with a bonding agent on a plastic base and compressing the combination at raised temperature and pressure. It is not known from this application that the fibres should be unbonded and the length of the fibre should be greater than the largest cross section dimension of the opening of the honeycomb structure and that during the compression of the combination of honeycomb and fibre blankets at raised temperature and pressure the fibres penetrate in the honeycomb thereby considerably increasing the contact surface between the blankets and the honeycomb structure.

Japanese Patent Gazette No. 86-1940 17/30 (JP-A-61 127 341) discloses a process for making a sandwich structure wherein a solvent type adhesive obtained by mixing thermoplastic PU resin and polyisocyanate is applied on both open surfaces of a honeycomb structure. After the solvent is evaporated an adhesive coated metal, wood or decorative plate is pressed on both sides of the honeycomb. It is not disclosed in this Japanese publication to cover the open sides of the honeycomb with a fibre blanket of unbonded fibres of which the length is greater than the largest cross section dimension of the openings of the honeycomb structure and that during the compressing of the combination a part of the fibres penetrates into the honeycomb.

The honeycomb structure can be made of different materials such as aluminium, plastic or paper, which may or may not be impregnated with plastic. For cheap lightweight structures which can be used as panels or walls it is preferable to use paper.

The most suitable thermosetting plastics for the process according to the invention are polyurethane resins and, furthermore, epoxy resins and unsaturated polyesther resins. These resins have the advantage that they set in a short time already at room temperature and lead to a rapid and economical manufacturing process. Urea, phenolic and melamine resins can also be used, however, these resins must be heated up to a temperature considerably higher than room temperature, generally near 100-140°C, in order to set rapidly enough for practical purposes.

Not only thermosetting plastics as bonding agent can be used but also thermoplastic materials such as polyethylene and polypropylene. One can, for example start from a fibre blanket, comprising an intimate mixture of jute or glass fibres and polyethylene or polypropylene fibres. In the production of a lightweight sandwich structure according to the process of the invention, where a fibre blanket of thermoplastic fibres is used the temperature and the pressure must be selected in such a way that the thermoplastic fibre soften and merge. On account of their mechanical strength the lightweight sandwich structures according to the invention can be used for construction purposes in the building trade for walls, doors, furniture, and in any place where light and strong sandwich panels are usable.

It is strongly preferred that the blankets are made of unbonded fibres and that the bonding agent in liquid, powder, granular or fibre form is intimately distributed in the blankets.

Very good results are obtained if the bonding agent is a polyurethane resin in the form of a liquid mixture of a polyhydric alcohol and a polyvalent isocyanate.

The invention will be explained in greater detail with reference to the following examples:

A. A 500 g/m² jute needle fibre mat is impregnated with a polyurethane resin mixture, comprising 100 parts polyol of the triol or quadrol type; 85 parts isocyanate of the methylenediphenyl diisocyanate (MDI) type; and 0.05 - 0.1 part catalyst, for example an organotin or another organometal compound such as tin octoate, tin naphthanate, lead naphthenate, vanadium oxyisopropylate. This mat is placed on either side of a honeycomb structure of paper the inscribed circle of which has a diameter of 12 mm, and the height of which is 20 mm. The fibre compound is pressed onto the honeycomb sheet in a press at a temperature of 50°C and a pressure of 5 kg/cm². After a few minutes a sandwich structure has been produced, in which the sturdy covering layers of the fibre-reinforced polyurethane sheets are tightly bonded to the honeycomb structure. The compression strength of the sandwich is 5.9 kg/cm². and the tensile strength is 100 kg/cm².

B. A blanket of unbonded glass fibres is sprayed with a liquid, unsaturated polyester mixture which is provided with a peroxide catalyst. The glass-fibre blanket treated in this manner is placed on both sides of a honeycomb structure of paper, and the whole is then compressed in a press at 80°C. After a few minutes a sturdy, lightweight sandwich structure has been produced.

**Claims**

1. Process for the production of a lightweight sandwich structure comprising: covering the open sides of a honeycomb structure with a fibre blanket impregnated with a bonding agent on a plastic base, and compressing the fibre blankets and honeycomb at raised temperature and pressure, characterized in that the fibre blankets consist of substantially unbonded loose fibres and the length of the fibres is greater than the largest cross section dimension of the openings of the honeycomb structure, and that during the compressing of the fibre blankets and the honeycomb at raised temperature and pressure a part of the fibres penetrates into the open spaces of the honeycomb thereby considerably increasing the contact surface between the blankets and the honeycomb structure.

2. Process according to claim 1 or claim 2, characterized in that the bonding agent is a polyurethane resin in the form of a liquid mixture of a polyhydric alcohol and a polyvalant isocyanate.

## Patentansprüche

1. Verfahren zum Herstellen eines leichtgewichtigen Schichtenaufbaus mit: Abdecken der offenen Seiten einer Honigwabenstruktur mit einem Fasertuch, das mit einem Verbindungsmittel auf Kunststoffbasis imprägniert ist, Zusammenpressen der Fasertücher und der Honigwabe bei erhöhter Temperatur und Druck, dadurch gekennzeichnet, daß die Fasertücher aus im wesentlichen nicht verbundenen losen Fasern bestehen und die Länge der Fasern größer als die größte Querschnittsabmessung der Öffnung der Honigwabenstruktur ist, und daß während des Zusammenpressen der Fasertücher und der Honigwabe bei erhöhter Temperatur und Druck ein Teil der Fasern in die offenen Räume der Honigwabe eindringen, wodurch die Berührungsfläche zwischen den Tüchern und der Honigwabenstruktur wesentlich vergrößert wird.

2. Verfahren nach Anspruch 1 oder 2, dadurch gekennzeichnet, daß das Verbindungsmittel ein Polyurethankunstharz in der Form einer flüssigen Mischung aus einem mehrere Hydroxylgruppen enthaltenden Alkohol und einem mehrwertigen Isocyanat ist.

## Revendications

1. Procédé de fabrication d'une structure sandwich légère comprenant : le recouvrement des côtés ouverts d'une structure en nid d'abeilles d'une couverture de fibres imprégnée d'un agent de liaison à base de matière plastique et la compression des couvertures de fibres et du nid d'abeilles à une température et sous une pression élevées, caractérisé en ce que les couvertures de fibres sont constituées de fibres lâches pratiquement non liées et en ce que la longueur des fibres est supérieure à la dimension de la section transversale la plus grande des ouvertures de la structure en nid d'abeilles et en ce qu'au cours de la compression des couvertures de fibres et du nid d'abeilles à une température et sous une pression élevées, une partie des fibres pénètre dans les espaces ouverts du nid d'abeilles, augmentant ainsi considérablement la surface de contact entre les couvertures et la structure en nid d'abeilles.

2. Procédé selon la revendication 1 ou 2, caractérisé en ce que l'agent de liaison est une résine de polyuréthane sous la forme d'un mélange liquide d'un polyalcool et d'un polyisocyanate.